# EUROPEAN PATENT SPECIFICATION

(11) **EP 0 544 695 B1**
(45) Date of publication and mention of the grant of the patent: **03.05.1995**
(21) Application number: 91913143.3
(22) Date of filing: 09.07.1991
(51) Int. Cl.: B62D 27/06, B60P 7/04, B60J 7/10

(54) **A DEVICE AT STANCHIONS FOR VEHICLE LOAD PLATFORMS WITH COVER AND COVER SUPPORT**
VORRICHTUNG AN RUNGER FÜR LADEPLATTFORMEN AN FAHRZEUGEN MIT ABDECKUNG UND ABDECKUNGSHALTER
DISPOSITIF D'ETAN ONS POUR PLATES-FORMES DE CHARGEMENT DE VEHICULES COMPORTANT UNE COUVERTURE ET UN SUPPORT DE COUVERTURE

(30) Priority: 09.07.1990 SE 9002395
(43) Date of publication of application: 09.06.1993
(73) Proprietor: ROSEN, Göran, 531 16 Lidköping (SE)
(72) Inventor: ROSEN, Göran, 531 16 Lidköping (SE)
(74) Representative: Roth, Ernst Adolf Michael (SE)
(86) International application number: SE9100490
(87) International publication number: WO9200869

(56) References cited:
- EP-A- 0 051 575
- SE-B- 328 792
- SE-B- 461 905
- US-A- 4 850 632

## Description

The present invention refers to a device at stanchions for vehicle load platforms with cover and cover support, which stanchions in their upper ends are extended by means of a removable cover support by an open hinge joint, the swing of which is limited to a position in which the stanchion and the cover support are located in the axial extension of each other, and in which position the housing of the stanchion is lockable to the cover support by means of a locking mechanism.

### Background of the invention

Stanchions for load platforms of the type mentioned above, e.g. DE-C-1580650, since the mid- sixties, when these were developed, have gone through relatively small changes. The still consist of a large number of mechanically cooperating parts, where every single part demands machining und surface conditioning and assembly, which results in relatively high cost of manufacture.

The housing of the stanchion until now has been produced from two or several parts, namely a solid, rear sheet and a U- formed covering sheet, which is welded to the rear sheet, after locating and mounting of all locking mechanisms. After the welding of the rear sheet to the covering sheet, and an aligning of the stanchion also has been necessary in addition to a further surface conditioning.

A complete stanchion program comprises front, lateral and rear stanchions in a large amount of designs, where the height, the number of flap locks, the design of the attachment of the load platform, with or without cover support, with or without TIR loop and so on may vary. This means that in spite of a considerable standardization of the components included the number of parts is still very large, which in turn leads to extensive storage space.

Certain attempts have been made (WO 83/01420) to simplify the manufacture of stanchions for load platforms by using specially manufactured aluminium profiles in as large extent as possible. Its true that a stanchion of this type as for the weight will be lighter and demands less surface treatment, but for the rest the drawbacks mentioned above will remain. Moreover such a stanchion ist nearly impossible to straighten if it has been exposed to a deformation, which often occurs, since the load during transport easily is displaced and the stanchions have to absorb these stresses.

The same requirements which have been proposed concerning the design of the stanchion to the same high degree applies to the extension part of the stanchion which connects this with the handrail of the cover support. This extension part, which in the continuation is called a cover support, formerly has also been manufactured from combined steel profiles, which results in that they are heavy when handled manually, which is due to occur as soon as the opening of the load platform has to be wider than the distance between two cover supports. Another drawback with present cover supports has been that a relatively large force is required at the connection of the stanchion with the cover support, which moreover is aggravated by the circumstance, that the connection between these two parts occurs at the top of the stanchion, which as a rule is located a distance above normal height of a man referred to the ground.

### The object of the invention

The object of the invention is to provide a cover support which is simple in design but at the same time light weight, and stanchion, which meet the above mentioned requirements of easy to handle, when the stanchion and the cover support are connected to each other and disconnected from each other respectively. Further it should be possible to maintain the connection between these even when the connection between the stanchion and the load platform is cancelled, so that the cover support with attached stanchion can be moved laterally hanging in a special guide in the handrail of the cover frame. These problems have been solved by the separate characterizing parts stated in the patent claims.

### Description of the drawings

The invention will be described in greater detail below with reference to accompanying drawings which show some embodiments of the invention.
Fig. 1 shows a stanchion according to the invention in a view from the front with a part of the front side of the stanchion broken up to show the locking mechanisms of the stanchion.
Fig. 2 shows a section along the line II-II in fig. 1, with the locking mechanisms in locking position.
Fig. 3 is a view analogous to that of fig. 2 with the flap locking mechanism in open position.
Fig. 4 is likewise a section analogous to that of fig. 2 with the flap locking mechanism as well as the loading platform locking mechanism in open position.
Fig. 5 shows the stanchion according to fig. 1 in a view from the rear.
Fig. 6 is a section along the line VI-VI in fig. 1.

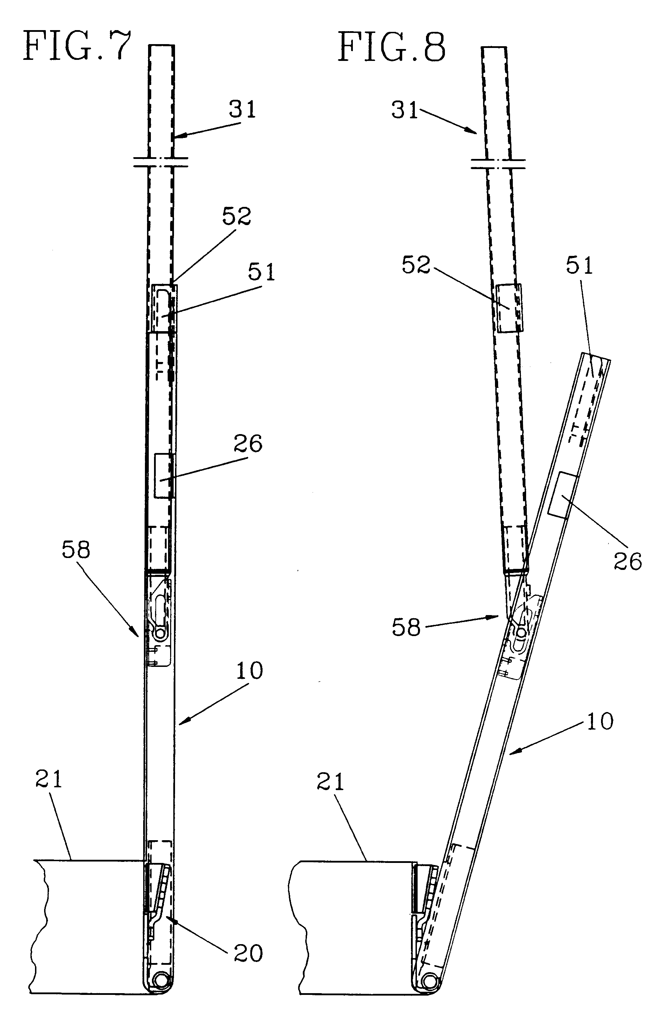

Fig. 7 shows a section through a stanchion and a cover support forming an integrated unit, in its locked position.
Fig. 8 shows a section analogous to that of fig. 7 of the stanchion and the cover support in a partly unfolded position with the locking mechanism in unlocked position.
Fig. 9 and 10 in greater scale show details around the open hinge joint about the stanchion and the open hinge joint of the cover support.

### Description of embodiments

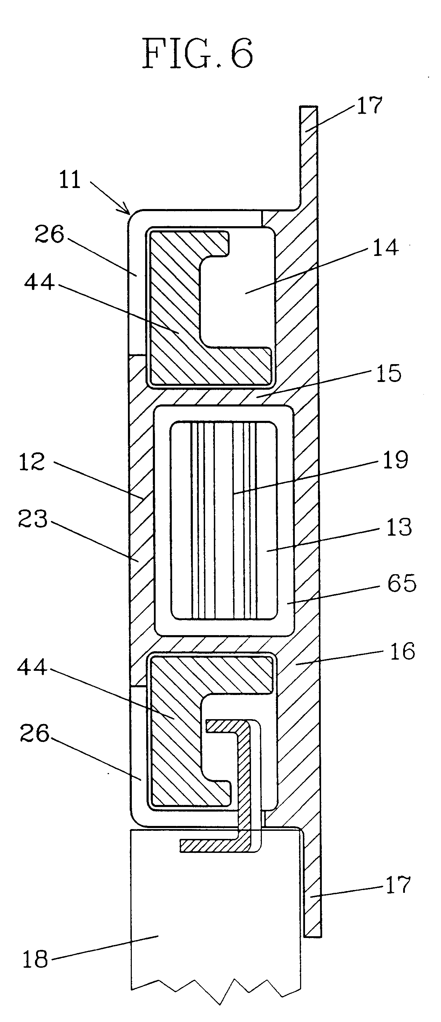

The stanchion according to the invention as a whole is designated with 10 and consists of a stanchion housing 11, which is preferably constituted by an aluminium profile manufactured by extrusion and which can be cut into suitable lengths. The cross section of the stanchion housing 11 has the form of a closed hollow profile 12, as can be seen in fig. 6, and which profile is divided into two or three longitudinal channels, the one of which in the continuation is called reinforcement channel 13 and the other or the others for locking channel/channels 14. The channels are separated by partition walls 15 and the stanchion housing is limited at the rear by a solid rear wall 16, which has greater width than the width of the hollow profile 12, so that shoulder lists 17 are formed, against which load flaps 18 rest, when these are in folded up position. The stanchion housing 11 is open at the top and at the bottom and at the bottom end provided with a stanchion shaft 19 intended to be positioned in a stanchion attachment 20, which is fixedly connected to the edge beam 21 of the load platform. In the lower part of the stanchion housing in the rear wall 16 is formed a recess 22, which mainly has the same but slighter form as the outer shape of the load platform attachment 20 and through which recess 22 the platform attachment can pass when the stanchion is swinged about the stanchion shaft 19 and to contact against the edge beam 21.

As mentioned above the stanchion may consist of two or three longitudinal channels 13, 14 depending if it is a single stanchion e.g. at the front end of the loading platform to fix one single load platform flap or also a double stanchion for fixing of one load flap 18 on each side of the stanchion. In the continuation such a double stanchion will be described in closer detail. On the front side of the stanchion housing oblong apertures 24 are machined for each control lever 25 and rectangular apertures 26, which extend from the front side of the stanchion housing and along its lateral wall to the rear wall 16, and which apertures, are intended for receiving of lock fittings 27 fixedly arranged at the edge fitting of the load flap 18.

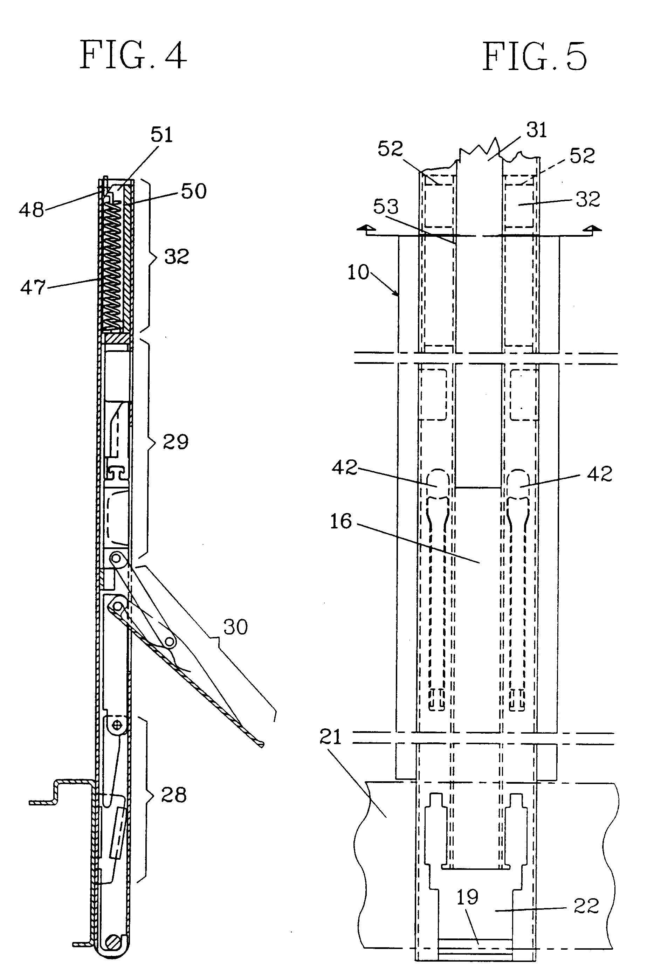

The locking channels 14 of the stanchion housing 11 - see fig. 4 - are provided partly with a load platform mechanism 28 and partly a flap locking mechanism 29, which both are interconnected by means of a control section 30. If the stanchions also are going to support cover supports 31 a suitable locking mechanism 32 is also arranged in the upper part of the locking apparatus channels 14.

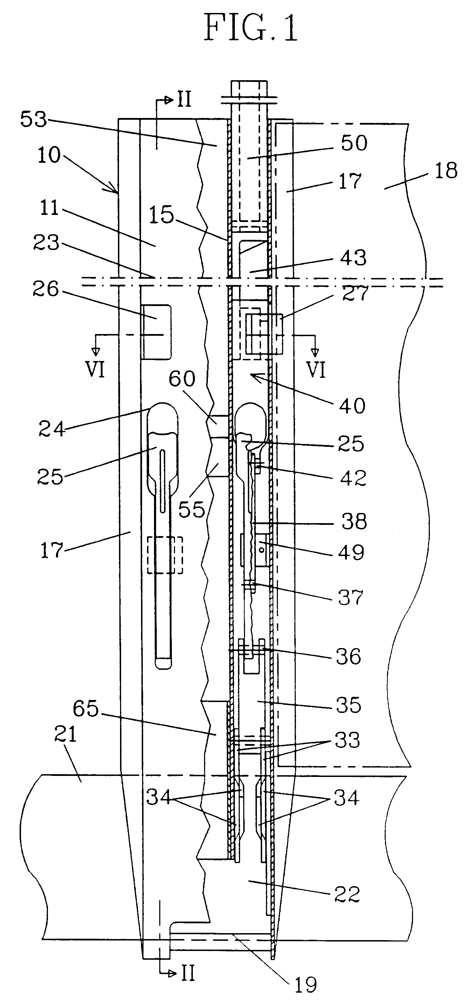

The load platform locking mechanism 28 consists as previously known of at least one locking wedge 33, which cooperates with guiding rails 34 provided at the platform attachment 20. The locking wedge 33 in its upper end is pivotably connected to an interconnection link 35, which in turn is connected by a first pivot shaft 36 to said control lever 25.
At some distance from the first pivot shaft 36 is provided a second pivot shaft 37, on which a link arm 38 is articulatedly pivoted, the opposite end of which is articulatedly connected with the flap locking mechanism 29. In the embodiment shown this comprises a connection part 39, pivotably connected with said link arm 38 and a flap locking bolt 40. Depending on the width of the load flap 18 this may be provided with one, two or three lock fittings 27, which each cooperate with each flap locking bolt 40 in the stanchion, which also can be seen in fig. 1. In order to overcome the distances between the flap locking bolts 40 spacing pieces 41 are provided, which can be of different lengths.

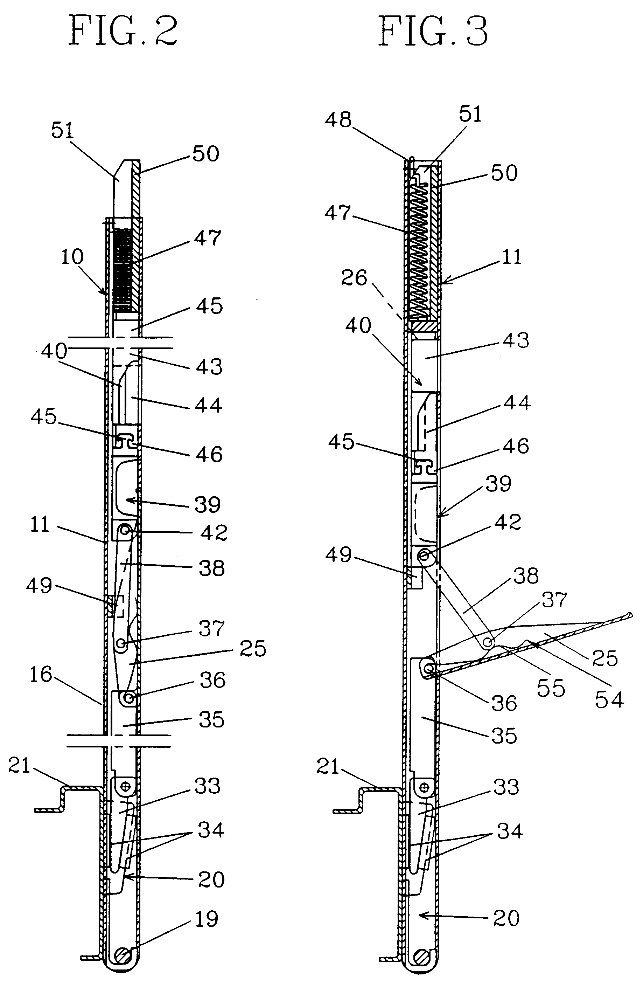

The parts contained in the flap locking mechanism 29 can be constituted by form parts, preferably of plastic, which are mutally untwistable and axially stiff and easily releasably connected to each other. These form parts with a small play fill substantially the whole cross section in the channel 14, the wall surfaces of which serve as slide and guide surfaces. Alternatively certain parts can be made of steel, while the slide and guide surfaces are made of a suitable plastic material. The connection part 39 or if this forms an integral part with the flap locking bolt 40 is provided with a recess, the object of which is to faciliate the folding out of the control lever 25. The flap locking bolt 40 comprises partly a lock port 43, through which the locking fitting 27 of the load flap 18 can be brought, and which locking port is located right ahead of the opening 26 when the locking mechanisms take the position shown in fig. 3 and 4, that is a position in which the lock fitting 27 freely can move in and out of said lock port 43. Below this is provided a locking pin 44, which in cross section is L-formed, and which locks the lock fitting 27 as well perpendicular to the plane of the flap lock as in the plane of the flap lock. As well the flap locking bolt 40 as the spacing pieces 41 at one end are formed with male formed coupling means 44 and at the opposite end with a female formed coupling means 46. On the flap locking bolt 40 located in the uppermost part of the stanchion housing 11 acts a compression spring 47, which by means of a shoulder 48 is attached to the inside of the uppermost part of the stanchion housing.

The movement upwards of the load platform locking mechanism 28 and the downward movement of the flap locking mechanism 29 are limited by a common stop means 49, which is attached to the inside of the stanchion housing. In the folded up and locked position of the control arm 25, as can be seen in fig. 2 the locking wedge 33 is in engagement with the guide rails 34 of the load platform attachment simultaneously as the flap locking bolt 40 is located in its upper locking end position, in which the both locking mechanisms are under control of the compressed compression spring 47. Since the pivot axis 37 is located inside an imagined line through the pivoting axes 36 and 42, a stable locking position for the control arm 25 is obtained, even when this is standing under a powerful spring pressure.

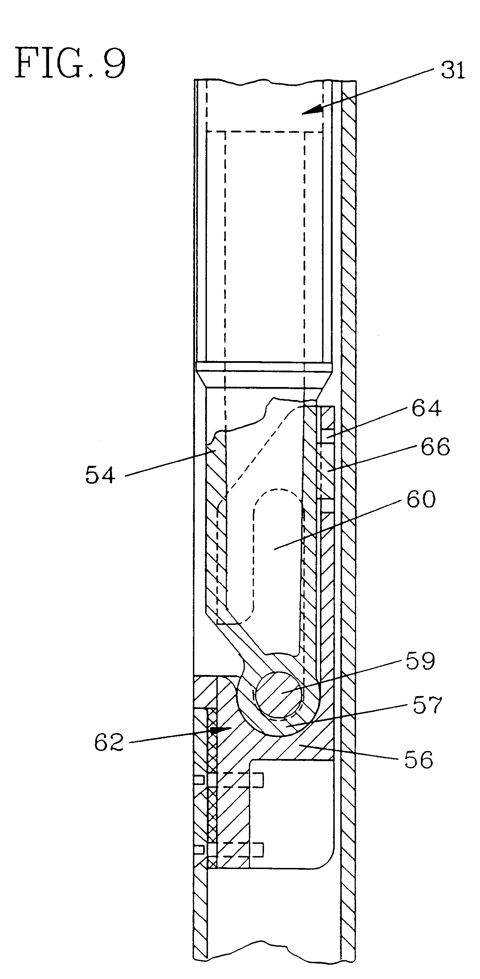

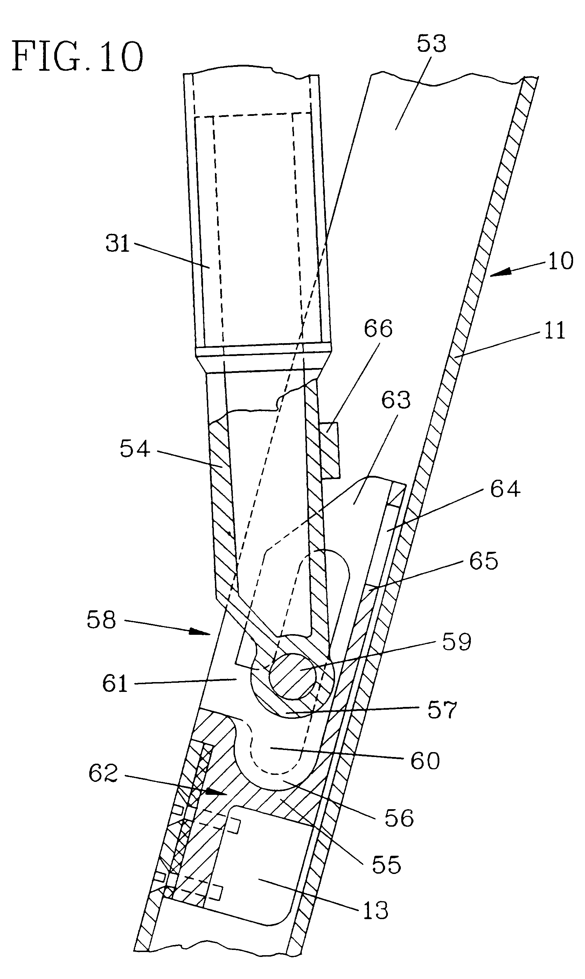

If the stanchion 10 even is to be extended by an extension part, in the continuation called cover support 31, the upper flap locking bolt 40 is completed by a lock 50, which is provided with a longitudinal slot 51 for receiving the compression spring 47. In locking position one part of the lock 50 is in egagement with the locking sleeves 52 - fig. 5 - of the cover support 31. A stanchion housing 11, to which a cover support 31 shall be possible to connect, right in front of the reinforcement channel 13 at the upper part of the stanchion is formed with an opening 53 in the rear wall 16, which extends a distance downwards from the upper end edge of the stanchion. At the lower end of the opening 53 is provided a bearing 55 - Fig. 9 and 10 - in the form of a bearing shell 56 for receiving of a hinge joint shaft 57 provided at the free end of the root portion 54 of the cover support 31. The bearing 55 and the hinge joint shaft 57 thus form an open hige joint 58. The cover support 31 consists in the same way as the stanchion 10, of a preferably extruded Al-profile, which in the embodiment shown comprises three channels, one center channel 67 and two lateral channels 68. The root portion 54 consists only of the center channel 67, that is the lateral channels 68 are cut off.

Inside the the hinge joint shaft 57 a guide pin 59 is provided with bearings, which guide pin has somewhat larger length than the hinge joint shaft 57, and which is insertable into a slot 60, on each side of the end portion of the hinge joint shaft. The slot 60 is provided with an opening 61, which makes it possible to separate the cover support 31 from the stanchion 10. The hinge joint bearing 62 of the stanchion which is U-formed and at which the slots 60 are provided in the side shanks 63 of the U, is also provided with at least one recess 64 in the mid portion 65 between the side shanks 63. At the root portion 54 of the cover support 31, just in front of the recess 64 is provided a shoulder 66, which can be inserted into the recess 64, when the hinge joint shaft 57 reaches the bottom in the bearing shell 56 of the stanchion and the cover support 31 and the stanchion 10 are situated in each others extension, whereby it can be prevented, that the cover support and the stanchion can be pulled apart.

The invention is not limited to the embodiments described and shown, but several variants are possible within the scope of the patent claims.

### DISPOSITION OF REFERENCE DESIGNATIONS

- 10: = stanchion
- 11: = stanchion housing
- 12: = hollow profile
- 13: = reinforcement channel
- 14: = locking channel
- 15: = partition wall
- 16: = rear wall
- 17: = shoulder list
- 18: = load flap
- 19: = stanchion axis
- 20: = load platform attachment
- 21: = the edge beam of the load platform
- 22: = recess in the rear wall
- 23: = front side of the stanchion housing
- 24: = oblong opening for the control arm 25
- 25: = control lever
- 26: = rectangular opening for lock fittings 27
- 27: = lock fittings
- 28: = load platform locking mechanism
- 29: = flap locking mechanism
- 30: = control section
- 31: = extension part / cover support
- 32: = locking mechanism for the cover support 31
- 33: = locking wedge
- 34: = guide rails
- 35: = connection link
- 36: = first pivoting shaft
- 37: = second pivoting skaft
- 38: = linkarm
- 39: = connection part
- 40: = flap locking bolt
- 41: = spacing pieces
- 42: = third pivoting shaft
- 43: = locking port
- 44: = locking pin
- 45: = male formed coupling means
- 46: = female formed coupling means
- 47: = compression spring
- 48: = shoulder
- 49: = stop means
- 50: = lock
- 51: = slot
- 52: = locking sleeves
- 53: = opening in the rear wall
- 54: = the root part of the cover support
- 55: = bearing
- 56: = bearing cup
- 57: = hinge joint shaft
- 58: = dismountable hinge joint
- 59: = guide pin
- 60: = open slot
- 61: = opening
- 62: = hinge joint fittings
- 63: = lateral shanks
- 64: = recess
- 65: = center portion
- 66: = shoulder
- 67: = center channel
- 68: = side channel

## Claims

1. Device at stanchions (10) to vehicle load platforms with cover and cover support, which stanchions in their upper end are extended by means of a removable cover support (31) by an open hinge joint (58) the pivotability of which is limited to a position in which the stanchion (10) and the cover support (31) which are situated in the axial extension of each other, and in which position the stanchion housing (11) of the stanchion is attachable to the cover support (31) by mens of a locking mechanism (32),
**characterized therein**
that the stanchion housing consists of a hollow profile (12) closed in cross section, the inside of which is divided into at least two longitudinal channels (13,14),
that one channel (13) of the stanchion housing (11) at the upper part of the stanchion (10) is provided with a longitudinal opening (53) in the part of the stanchion which forms its rear wall, which opening has a considerable extension from the upper end edge of the stanchion housing to receive the root portion (54) of the cover support (31), the bottom end of the root portion together with the interior (53) of the opening being designed to form an open hinge joint, and
that in the other channel/channels (14) of the stanchion housing (11) is provided at least one in said locking mechanism (32) containing and in the channel (14) displaceable lock (50), which is provided to cooperate with a locking sleeve (52) in the cover support (31).

2. Device according to claim 1,
**characterized therein**,
that the cover support (31) likewise consists of a hollow profile which is closed in cross section, the interior of which is divided into at least two longitudinal channels (67, 68),
that one of the channels has greater length than the other or the rest of the channels (68),
that the longer channel external cross sectional form is shaped to fit into one channel (13) of the stanchion housing (11), which in its rear wall (26) is provided with an elongated opening (53), and
that this or the rest of the channels (68) are provided with a locking sleeve (52) or the like for receiving the lock (50) contained in the locking mechanism (32) of the stanchion.

3. Device according to claim 1,
**characterized therein**,
that the open, dismountable hinge joint (58) except for a bearing (55) and with this cooperating hinge joint shaft (57) also contains a guide pin (59) in the cover support (31), which is displaceable provided in at least one slot (60) in a fitting (62) in the upper part of the stanchion.

4. Device according to claim 1,
**characterized therein**,
that at the upper part of the stanchion (10) in one of the channels (13) is mounted a fitting (62), which contains the bearing shell (56) of the open hinge joint (58) and at least one recess (64), which is provided to cooperate with at least a corresponding shoulder (66) provided at the root section (54) of the cover support (31).

## Patentansprüche

1. Vorrichtung mit Streben (10) für Fahrzeugladeflächen mit Abdeckung und Abdeckungsstütze, wobei die Streben an ihren oberen Enden mit Hilfe eines offenen Scharniergelenks (58) durch eine abnehmbare Abdeckungsstütze (31) verlängert sind. Das Gelenk läßt sich soweit drehen, bis die Strebe (10) und die Abdeckungsstütze (31) eine Linie bilden und das Strebengehäuse (11) der Strebe durch einen Verriegelungsmechanismus (32) mit der Abdeckungsstütze (31) verriegelbar ist,
dadurch gekennzeichnet,
daß das Strebengehäuse aus einem im Querschnitt geschlossenen Hohlprofil (12) besteht, dessen Inneres in mindestens zwei Kanäle in Längsrichtung (13,14) unterteilt ist,
daß ein Kanal (13) des Strebengehäuses (11) am oberen Ende der Strebe (10) in ihrer Rückwand mit einer Öffnung in Längsrichtung (53) versehen ist, die sich in beträchtlichem Maße von der oberen Kante des Strebengehäuses erstreckt, um den unteren Teil (54) der Abdeckungsstütze (31) aufzunehmen, wobei das unterste Stück der Stütze und das Innere (53) der Öffnung ein offenes Scharniergelenk bilden, und
daß sich in dem anderen Kanal bzw. den anderen Kanälen (14) des Strebengehäuses (11) mindestens ein Verriegelungsmechanismus (32) befindet, der eine innerhalb des Kanals (14) bewegliche Verriegelung (50) enthält, die zum Zusammenwirken mit einer Verriegelungsmuffe (52) in der Abdeckungsstütze (31) vorgesehen ist.

2. Vorrichtung nach Anspruch 1,
dadurch gekennzeichnet,
daß die Abdeckungsstütze (31) ebenfalls aus einem im Querschnitt geschlossenen Hohlprofil besteht, dessen Inneres in mindestens zwei Kanäle in Längsrichtung (67,68) unterteilt ist,
daß einer der Kanäle länger als der andere bzw. die anderen Kanäle (68) ist,
daß der äußere Querschnitt des längeren Kanals so gestaltet ist, um in einen Kanal (13) des Strebengehäuses (11) zu passen, dessen Rückwand (16) eine längliche Öffnung (53) hat, und
daß dieser bzw. die anderen Kanäle (68) Verriegelungsmuffen (52) oder ähnliche Teile haben, um die im Verriegelungsmechanismus (32) der Strebe enthaltene Verriegelung (50) aufzunehmen.

3. Vorrichtung nach Anspruch 1 oder 2,
dadurch gekennzeichnet,
daß das offene, demontierbare Scharniergelenk (58) neben einem Lager (55), das mit einem Scharniergelenkschaft (57) zusammenwirkt, auch einen beweglichen Führungsstift (59) in der Abdeckungsstütze (31) enthält, der sich in mindestens einer Nut (60) in einem Anschlußstück (62) im oberen Teil der Strebe befindet.

4. Vorrichtung nach einem der Ansprüche 1 bis 3,
dadurch gekennzeichnet,
daß im oberen Teil der Strebe (10) in einem der Kanäle (13) ein Anschlußstück (62) montiert ist, das den Lageraußenring (56) des offenen Scharniergelenks (58) und mindestens eine Aussparung (64) enthält, die mit mindestens einer Schulter (66) zusammenwirken soll, die sich im unteren Teil (54) der Abdeckungsstütze (31) befindet.

## Revendications

1. Dispositif d'étançons (10) pour platesformes de chargement de véhicules comportant une couverture et un support de couverture, lesquels étançons se prolongeant à leur extrémité supérieure en un support de couverture (31) amovible au moyen d'une liaison à charnière ouverte (58), dont la liberté de pivotement est limitée à une position dans laquelle l'étançon (10) et le support de couverture (31) sont agencés dans le prolongement axial l'un de l'autre, et dans laquelle le logement d'étançon (11) de l'étançon peut être fixé au support de couverture (31) au moyen d'un mécanisme de verrouillage (32),
caractérisé en ce que
le logement d'étançon consiste en un profilé creux (12) à section transversale fermée, dont l'intérieur est divisé en au moins deux canaux longitudinaux (13, 14),
en ce qu'au niveau de la partie supérieure de l'étançon (10), un canal (13) du logement d'étançon (11) est doté d'une ouverture longitudinale (53) dans la partie de l'étançon qui constitue sa paroi postérieure, laquelle ouverture s'étend sur une importante distance à partir du bord de l'extrémité supérieure du logement d'étançon pour recevoir la base (54) du support de couverture (31), l'extrémité inférieure de la base et l'intérieur (53) de l'ouverture étant destinés à former une liaison à charnière ouverte, et
en ce que dans le ou les autres canaux (14) du logement d'étançon (11) est prévu au moins un verrou (50) contenu dans ledit mécanisme de verrouillage (32) et mobile dans le canal (14), ledit verrou étant prévu pour coopérer avec une douille de verrouillage (52) dans le support de couverture (31).

2. Dispositif selon la revendication 1, caractérisé en ce que le support de couverture (31) consiste également en un profilé creux à section fermée, dont l'intérieur est divisé en au moins deux canaux longitudinaux (67, 68),
en ce que l'un des canaux est plus long que l'autre ou le reste des canaux (68),
en ce que la section transversale externe du canal le plus long est conformée pour s'adapter dans un canal (13) du logement d'étançon (11) dont la paroi postérieure (26) présente une ouverture oblongue (53), et
en ce que ce canal ou le reste des canaux (68) sont dotés d'une douille de verrouillage (52) ou similaire pour recevoir le verrou (50) contenu dans le mécanisme de verrouillage (32) de l'étançon.

3. Dispositif selon la revendication 1, caractérisé en ce que la liaison à charnière ouverte (58) démontable, à part un coussinet (55) et un axe de charnière (57) coopérant avec ce dernier, contient également un axe de guidage (59) dans le support de couverture (31), qui est monté mobile dans au moins une rainure (60) d'une ferrure (52) dans la partie supérieure de l'étançon.

4. Dispositif selon la revendication 1, caractérisé en ce que dans la partie supérieure de l'étançon (10), dans l'un des canaux (13), est montée une ferrure (62) qui contient la coquille de coussinet (56) de la liaison à charnière ouverte (58) et au moins un évidement (64), prévu pour coopérer avec au moins un épaulement (66) correspondant, prévu à la base (54) du support de couverture (31).
